# EUROPÄISCHE PATENTSCHRIFT

(11) **EP 0 615 687 B1**
(45) Veröffentlichungstag und Bekanntmachung des Hinweises auf die Patenterteilung: **22.11.1995**
(21) Anmeldenummer: 93104330.1
(22) Anmeldetag: 17.03.1993
(51) Int. Cl.: A01M 3/00

(54) **Gerät zum Erfassen, Beobachten und Transportieren von Insekten, Spinnen und sonstigen Kleintieren**
Apparatus for detecting, observing and transporting insects, spiders and other little animals
Appareil pour détecter, observer et transporter des insects, araignées et autres petits animaux

(43) Veröffentlichungstag der Anmeldung: 21.09.1994
(73) Patentinhaber: Mühlinghaus, Heinrich, D-45549 Sprockhövel (DE)
(72) Erfinder: Mühlinghaus, Heinrich, D-45549 Sprockhövel (DE)
(74) Vertreter: Patentanwälte Wenzel & Kalkoff

(56) Entgegenhaltungen:
- DE-U- 9 012 348
- US-A- 3 494 067

## Beschreibung

Die Erfindung betrifft ein Gerät zum Erfassen, Beobachten und Transportieren von Insekten, Spinnen und sonstigen Kleintieren, bestehend aus einem an einer Seite offenen, mit Hilfe eines flexiblen Schiebers verschließbaren Fanggehäuse und einem mit diesem verbundenen Griffgehäuse, in dem der flexible Schieber in einem geraden Bahnabschnitt und anschließend in einem eine zweifache Umlenkung des Schiebers bewirkenden, seine Ober- und Unterseite abstützenden Bahnabschnitt zu einer an der offenen Seite gebildeten Fangöffnung des Fanggehäuses geführt und durch einen Betätigungsknopf verschiebbar ist.

Kleine Tiere, wie Insekten, Spinnen, Käfer und dergleichen, sind an bestimmten Orten, zum Beispiel Aufenthaltsräumen von Menschen, Lebensmittellagerräumen u. a., in der Regel unerwünscht und müssen von dort entfernt werden. Zum anderen sind derartige Kleintiere zu Lehrzwecken ein Objekt der Beobachtung, beispielsweise für Kinder. In diesen und ähnlichen Fällen sollen die Tiere erfaßt und nach dem Transport an einem geeigneten Ort oder nach der Beobachtung unverletzt wieder ins Freie entlassen werden.

Da das Fangen von derartigen Tieren mit der Hand zum einen nicht ohne weiteres gelingt und das Ergreifen mit den Fingern sowohl für den Menschen als auch das Tier verständlicherweise nicht unproblematisch ist, wurden Geräte und Vorrichtungen entwickelt, die das Ergreifen des Tieres erleichtern und unter Ausschluß einer beiderseitigen Verletzungsgefahr eine direkte Berührung zwischen Mensch und Tier verhindern sollen.

Bei einer bekannten Vorrichtung dieser Art (DE-GM 90 12 348.4) ist ein an der Unterseite offenes Fanggehäuse an der Rückwand mit einem nach oben abgewinkelten Griffgehäuse verbunden, in dem ein flexibler, aus einer Kunststoff- oder Stahlfolie bestehender Schieber geführt ist und mittels eines am Griffgehäuse beweglich angeordneten Betätigungsknopfes verschoben werden kann, um die Fangöffnung des Fanggehäuses, nachdem dieses über ein zu erfassendes Kleintier gestülpt wurde, mit dem flexiblen Schieber zu verschließen und das auf diese Weise unverletzt aufgenommene Tier später, d. h. nach der Beobachtung oder dem Transport, und gegebenenfalls an einem anderen Ort wieder freizusetzen. Die Führung des flexiblen Schiebers erfolgt vom Griffgehäuse zur Fangöffnung auch in dem/in dem Bereich seiner zweifachen Umlenkung gebildeten Bahnabschnitt zwischen senkrecht zu dem Schieber am Griffgehäuse angeordneten Stegen sowie im Fanggehäuse in einer U- bzw. L-Führung.

Die Handhabung dieser bekannten Vorrichtung bereitet insofern Schwierigkeiten, als der sehr dünne flexible Schieber unter der Wirkung der Schubkraft gerade auf seiner zweifach umgelenkten Führungsbahn dazu neigt, sich auszubeulen und zu wölben, so daß die Funktion des Verschiebemechanismus und insbesondere auch das ordnungsgemäße Verschließen der Fangöffnung nicht jederzeit gewährleistet ist, andererseits jedoch ein dickeres Schließelement den Verschiebevorgang erschwert und zudem nicht die unversehrte Aufnahme des zu fangenden Insekts oder anderen Kleintieres garantieren würde.

Andererseits ist die Handhabbarkeit der bekannten Geräte auch dadurch beeinträchtigt, daß die Breite des Griffgehäuses der des Fanggehäuses entspricht und somit entweder der Griff zu breit und das Gerät unhandlich oder das Fanggehäuse zu schmal und damit für den Fangvorgang ungeeignet ist. Schließlich ergeben sich auch fertigungstechnische Probleme bei diesen bekannten Geräten.

Der Erfindung liegt daher die Aufgabe zugrunde, ein Gerät bzw. eine Vorrichtung der eingangs erwähnten Art so auszubilden, daß eine einfache Handhabbarkeit beim Fangen und verletzungsfreien Aufnehmen des Kleintieres und eine störungsfreie Funktion des Schließmechanismus gewährleistet ist und die Vorrichtung zudem auf einfache Weise gefertigt bzw. leicht montiert werden kann.

Erfindungsgemäß wird die Aufgabe bei einer gattungsgemäßen Vorrichtung zum Erfassen, Beobachten und Transportieren von Insekten, Spinnen und sonstigen Kleintieren mit den Merkmalen von Anspruch 1 gelöst. Wesentliche Weiterbildungen finden sich in Anspruch 2 und 3 sowie in weiteren Ansprüchen.

Der Erfindung liegt dabei einerseits der Gedanke zugrunde, den aus einer dünnen Folie bestehenden flexiblen Schieber in am Griffgehäuse einstückig angeformten Führungselementen so abzustützen, daß zum einen die Reibung gering ist, also eine leichte Beweglichkeit des Schiebers erzielt wird, und andererseits ein Ausknicken der dünnen Folie beim Schließen der Fangöffnung, d. h. beim Schieben des flexiblen Schiebers, verhindert wird. Hierzu dienen einerseits in der vom Fanggehäuse abgewandten Seite des Griffgehäuses angeordnete, nämlich im geraden Bahnabschnitt der Führung des Schiebers, an den Innenseiten des vertikal geteilten Griffgehäuses angeformte, Nuten bildende Führungsleisten, während die Führung des flexiblen Schiebers in dem besonders störanfälligen im Bereich der zweifachen Umlenkung des Schiebers gebildeten Bahnabschnitt durch Anliegen der Unterfläche des Schiebers an der abgeschrägten Außenwandlung des Griffgehäuses und die Abstützung der Oberseite der den flexiblen Schieber bildenden Folie an seitlichen Führungsleisten, vorzugsweise auch an den als Führungsrippen verwendeten Versteifungsrippen für das Griffgehäuse und an dem zur mittigen Führung bzw. Abstützung gegen Ausbeulen dienenden Führungsschwert erfolgt. Das ordnungsgemäße Verschließen der Fangöffnung des Fanggehäuses wird schließlich dadurch unterstützt, daß dem flexiblen Schieber zu Beginn des Schließvorgangs an dem am Fanggehäuse befindlichen, abgebogenen Teil des Griffgehäuses und an einer an der Innenseite der seitlichen, unteren Kanten des Fanggehäuses angeordneten, spitz zulaufenden Führungsnase eine leichte Aufwärtsbewegung erteilt wird, so daß der flexible Schieber unter Spannung entlang einer am unteren Rand des Fanggehäuses gebildeten Führungskante verläuft und in jeder Schließstellung an den Rändern der Fangöffnung anliegt. Die am Fanggehäuse vorgesehene Führungskante für den flexiblen Schieber nähert sich in Schließrichtung immer mehr der Unterkante des Fanggehäuses, so daß am Ende des Schließvorgangs der Abstand zwischen der Auflagefläche, auf der das zu fangende Tier sitzt, und dem Schieber so gering ist, daß für das aufzunehmende Kleintier keine Verletzungsgefahr besteht.

Während des Schließvorgangs wird der flexible Schieber in allen Bereichen des Griffgehäuses seitlich und an der Ober- und Unterseite geführt und in den besonders gefährdeten Zonen vorzugweise mittig abgestützt, so daß ein Ausweichen des flexiblen Schiebers nach oben oder unten nicht zu befürchten ist.

Der Fertigungsaufwand für die vorgeschlagene Fangvorrichtung ist gering, da alle Führungselemente einstückig angeformter Bestandteil der ohnehin erforderlichen Bauteile - Griffgehäuse, Fanggehäuse, Betätigungsknopf - sind.

Die Montage der Fangvorrichtung ist demzufolge gleichermaßen einfach, da nur die fünf Einzelbestandteile in der Reihenfolge - erste Griffhälfte, Schieber, Betätigungsknopf, Fanggehäuse, zweite Griffhälfte - zusammengefügt werden müssen und danach lediglich die beiden Griffhälften in geeigneter Weise - durch Ultraschallschweißen oder lösbar durch eine Schraub- oder Rastverbindung - zu verbinden sind.

Nach einem wesentlichen Erfindungsmerkmal ist nämlich das Fanggehäuse als separates Einzelelement mit einer an dessen Rückwand angeformten T-förmigen Klemmhalterung und daran angeformtem Führungsschwert ausgebildet. Das Fanggehäuse wird in vorteilhafter Ausgestaltung der Erfindung an der vorderen Stirnwand des Griffgehäuses über eine flächige Erhöhung an der Rückwand des Fanggehäuses und eine entsprechende Vertiefung an der Stirnwand des Griffgehäuses verdrehsicher befestigt, wobei das Führungsschwert nun durch einen Schlitz in der Stirnwand in das Innere des Griffgehäuses ragt. Die Fertigung und Montage wird dadurch wesentlich vereinfacht.

Nach einem weiteren Erfindungsgedanken ist das Fanggehäuse breiter als das Griffgehäuse bzw. der Griff ausgebildet, so daß die Handhabbarkeit der Vorrichtung insofern verbessert wird, als einerseits die Fangöffnung größer ausgebildet und damit leichter insbesondere auf größere Insekten und dergleichen aufgesetzt werden kann und andererseits der Griff eine handliche Form annimmt. Zu diesem Zweck besteht der flexible Schieber aus einem breiten Verschließabschnitt für die Fangöffnung und einem schmalen Verschiebeabschnitt entsprechend der Breite des Griffteils des Griffgehäuses. Des weiteren besteht das Griffgehäuse aufgrund dieser Ausbildung aus einem der Breite des Verschließabschnitts des flexiblen Schiebers entsprechenden erweiterten Abschnitt im Bereich des Bahnabschnitts der zweifachen Umlenkung des Schiebers im an das Fanggehäuse angrenzenden Teil des Griffgehäuses und einem schmaleren handlichen Griffabschnitt, auf dessen Breite das Maß des Verschiebeabschnitts des flexiblen Schiebers abgestimmt ist.

Einer gegebenenfalls breiteren Ausführung des Fanggehäuses und demzufolge des Schiebers wird die Erfindung in weiterer Ausgestaltung insofern gerecht, als zwei oder mehrere Führungsschwerter an der Klemmhalterung des Fanggehäuses angeformt sind. Andererseits können die Führungsschwerter zur zusätzlichen Stützung des schmaleren Verschiebeabschnitts des flexiblen Schiebers mit Verlängerungen ausgerüstet sein.

In vorteilhafter Ausbildung der Erfindung ist an dem Betätigungsknopf für den Schieber ein Mitnehmerstift angeformt, der in eine Bohrung des flexiblen Schiebers eingreift, um diesen bewegen zu können.

In den verbleibenden Unteransprüchen sind weitere vorteilhafte Ausgestaltungen und zweckmäßige Weiterbildungen der Erfindung aufgeführt.

Mit der erfindungsgemäß vorgeschlagenen Vorrichtung wird somit ein Fanggerät zur Verfügung gestellt, das einfach zu fertigen bzw. zu montieren und darüber hinaus handlich und leicht zu bedienen ist. Die für die exakte Funktion der Fangvorrichtung erforderliche Führung des als flexibler Schieber ausgebideten Schließelements erfolgt vom Betätigungsgriff über das Griffgehäuse bis zum Fanggehäuse über ein System von in die Geräte Bauteile integrierten Führungselementen, die maßgeblich den geringen Herstellungsaufwand und die einfache und störungsfreie Bedienbarkeit bestimmen und letztlich das sichere und unversehrte Erfassen der zu fangenden Insekten, Käfer und dergleichen ermöglichen.

Im folgenden wird ein Ausführungsbeispiel der Erfindung anhand der zugehörigen Zeichnungen näher erläutert. Es zeigen:
- Fig. 1: eine perspektivische Ansicht einer erfindungsgemäßen Fangvorrichtung;
- Fig. 2: eine perspektivische Ansicht der vorgeschlage-Vorrichtung zum Erfassen, Beobachten und Transportieren von Insekten und ähnlichen Kleintieren, jedoch zur Darstellung des Innenraums der Fangvorrichtung teilweise im Schnitt;
- Fig. 3: ein aus einem flexiblen Schieber bestehendes Verschlußelement in perspektivischer Darstellung;
- Fig. 4: eine perspektivische Ansicht der Fangvorrichtung in auseinandergezogener Darstellung der Einzelbauteile;
- Fig. 5: einen Längsschnitt durch eine Fangvorrichtung zur vereinfachten Darstellung der Führung des flexiblen Schiebers;
- Fig. 6a: einen Schnitt längs der Linie I-I in Fig. 5 in zeichnerisch vereinfachter Darstellung mit Führung des flexiblen Schiebers im schmaleren Griffabschnitt;
- Fig. 6b: einen Schnitt längs der Linie II-II in Fig. 5 mit zusätzlicher Führung des flexiblen Schiebers durch Führungsrippen;

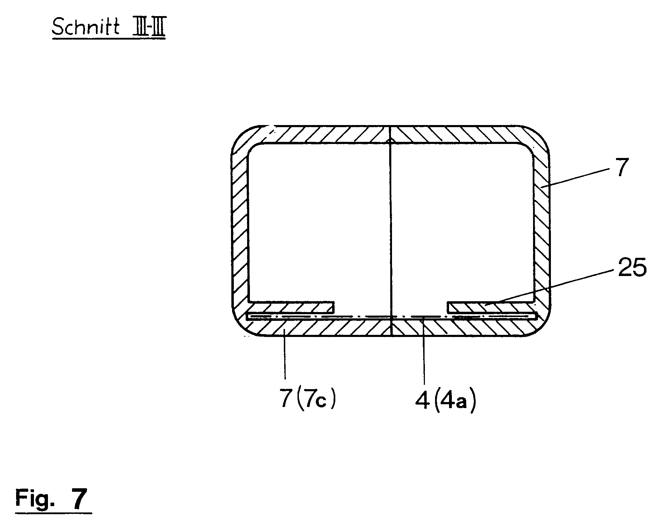

- Fig. 7: einen Schnitt längs der Linie III-III nach Fig. 5;
- Fig. 8: eine Ansicht des Fanggehäuses mit Führungselementen für den flexiblen Schieber sowie Klemmhalterung und Führungsschwert in perspektivischer Darstellung;
- Fig. 9: eine Seitenansicht des Fanggehäuses;
- Fig. 10: eine Draufsicht auf das Fanggehäuse;
- Fig. 11: eine vereinfachte Ausführungsform der Fangeinrichtung in perspektivischer, auseinandergezogener Darstellung der Einzelbauteile;
- Fig. 12 und Fig. 13: jeweils eine Sequenz aus 4 Bildern zur Veranschaulichung des Fangens und Wiederfreisetzens von Insekten mit einem erfindungsgemäßen Fanggerät, zum einen an einer Fensterscheibe und zum anderen am Boden.

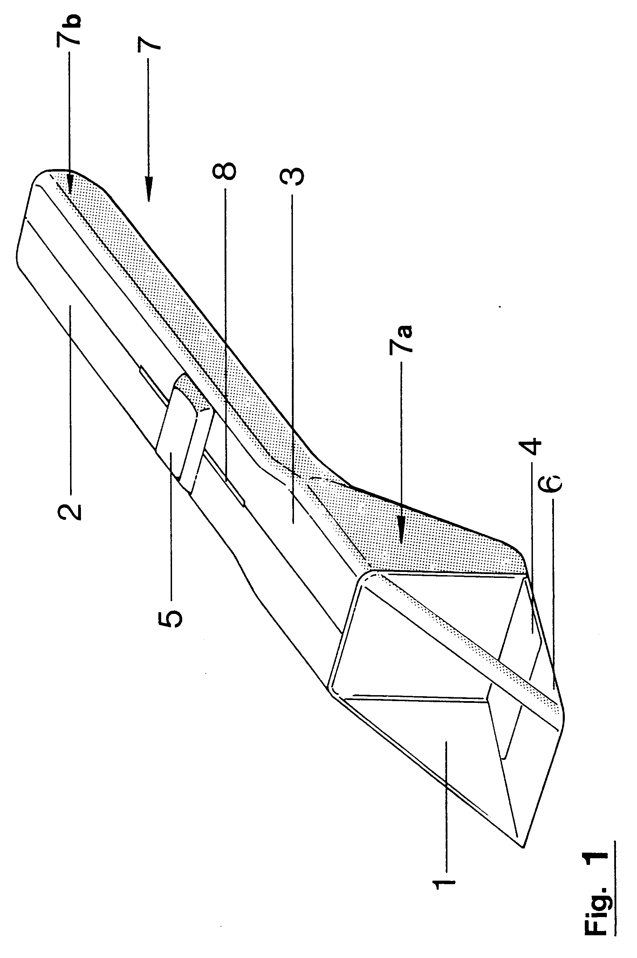

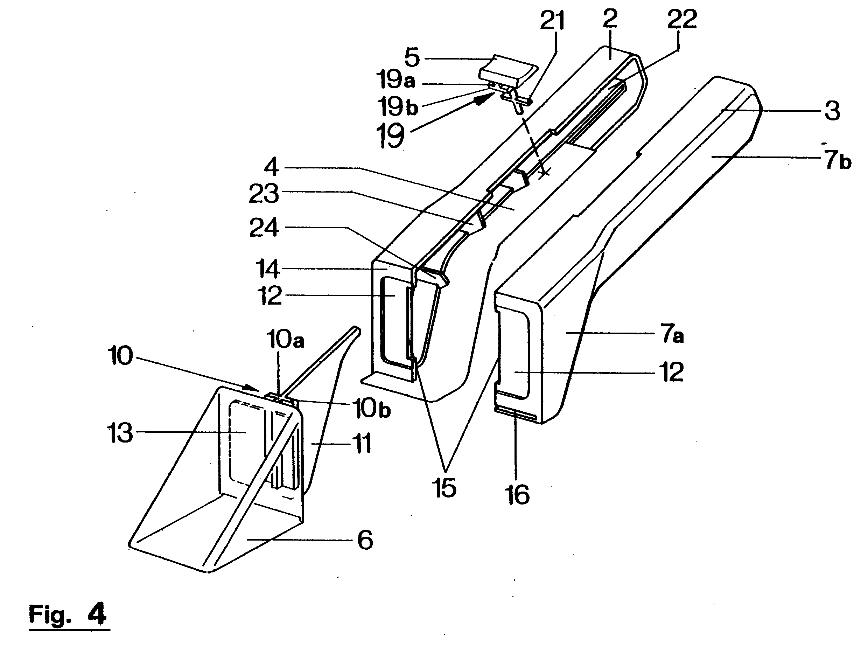

Die Vorrichtung zum Erfassen, Beobachten und Transportieren von Insekten, Käfern, Spinnen und anderen kleinen Tieren besteht, wie aus den Figuren 1 und 4 erkennbar ist, aus einem Fanggehäuse 1, einem aus zwei Griffhälften 2 und 3 gebildeten Griffgehäuse 7, einem in dem Griffgehäuse 7 geführten, als Schließelement für das Fanggehäuse dienenden flexiblen Schieber 4 und einem in einem Bewegungsschlitz 8 gleitend geführten Betätigungsknopf 5 zur Bewegung des flexiblen Schiebers 4, um die Fangöffnung 6 des Fanggehäuses 1 verschließen bzw. wieder öffnen zu können.

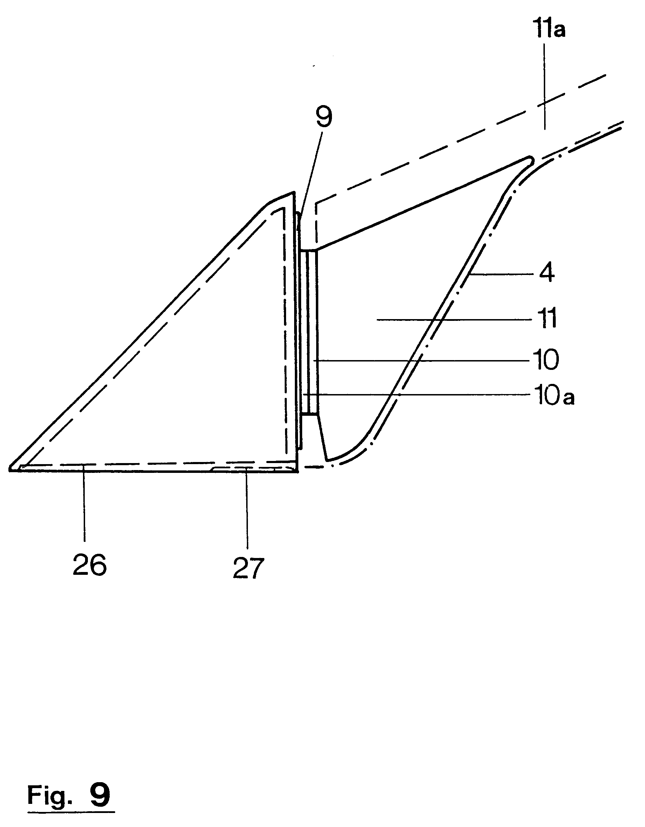

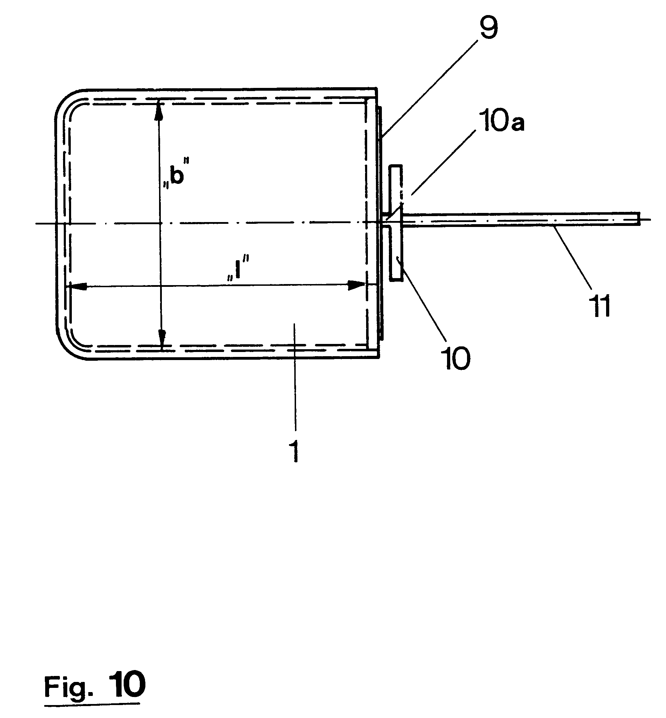

Das Fanggehäuse ist ein in einem Stück aus klarem, d. h. gut durchsichtigem Kunststoff gefertigter Hohlkörper, an dessen Unterseite die Fangöffnung 6 freigelassen ist und dessen Rückwand 13 eine flächige Erhöhung 9 (Fig. 9 und 10) sowie eine sich an diese anschließende, im Querschnitt T-förmige Klemmhalterung 10 zur Verbindung des Fanggehäuses 1 mit dem Griffgehäuse 7 aufweist. An die Klemmhalterung 10 schließt sich ein Führungsschwert 11 an. Wahlweise kann das Fanggehäuse 1 auch aus einem matten, lediglich durchscheinenden Material hergestellt sein.

Das aus den beiden Griffhälften 2 und 3 bestehende Griffgehäuse 7 ist durch einen der Breite des Fanggehäuses 1 entsprechenden erweiterten Griffteil miteinem Bahnabschnitt 7a, in dem eine zweifache Umlenkung des Shiebers 4, noch später noch im einzelnen erläutert wird bewirkt wird, und einem schmaleren Griffteil mit einem geraden Bahnabschnitt 7b des Schiebers 4 gebildet. Die beiden Griffhälften 2, 3 sind über eine Nut-Feder-Verbindung aneinandergesteckt und werden im Griffbereich durch Ultraschallschweißen fest miteinander verbunden. Es ist jedoch auch eine lösbare Verbindung, bei der die beiden Griffhälften miteinander verschraubt oder verrastet werden, denkbar.

Das Griffgehäuse 7 weist an seiner der Rückwand 13 des Fanggehäuses 1 zugewandten Stirnwand 14 eine flächige Vertiefung 12 auf, deren Form und Abmessung der flächigen Erhöhung 9 an der Rückwand 13 des Fanggehäuses 1 entspricht. Außerdem befindet sich in der Mitte der Stirnwand 14 ein senkrechter Schlitz 15 zur Aufnahme des Stegs 10a der T-förmigen Klemmhalterung 10. Am unteren Rand der Stirnwand 14 ist ein waagerechter Führungsschlitz 16 vorgesehen, durch den der flexible Schieber 4 geführt ist.

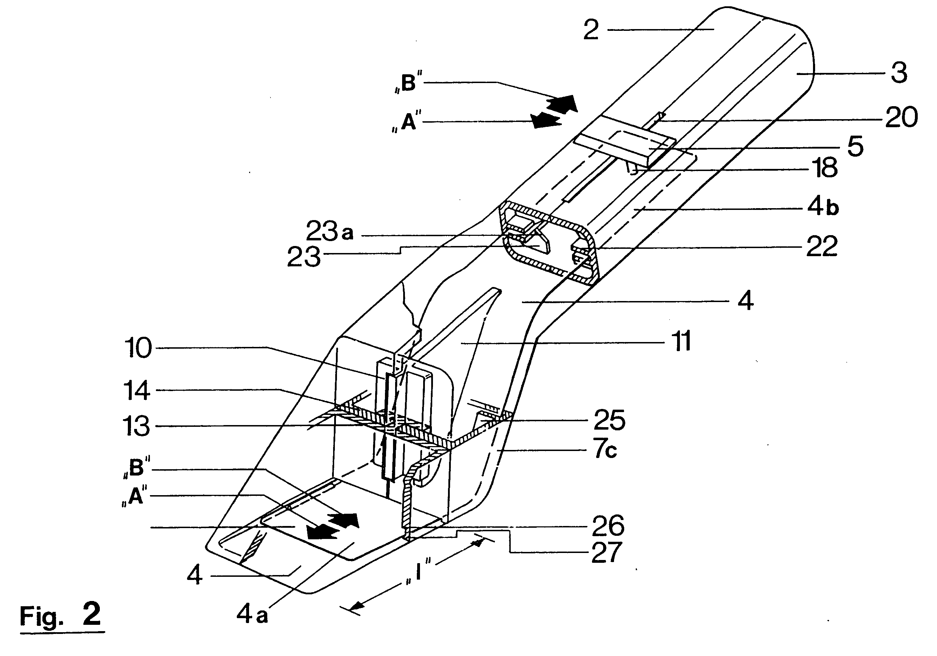

Das Fanggehäuse 1 und das Griffgehäuse 7 werden durch einen Fügevorgang miteinander verbunden, indem die T-förmige Klemmhalterung 10 mit ihrem Flansch 10b an der Innenseite der Stirnwand 14 verklemmt ist (Fig. 2) und mit ihrem Steg 10a in dem senkrechten Schlitz 15 in der Stirnwand 14 gehalten ist. Eine zusätzliche Sicherung gegen Verdrehen des Fanggehäuses 1 gegenüber dem Griffgehäuse 7 wird dadurch erzielt, daß die flächige Erhöhung 7 an der Rückwand 13 des Fanggehäuses 1 exakt in die flächige Vertiefung 12 der Stirnwand 14 des Griffgehäuses eingreift und somit für einen festen Sitz sorgt.

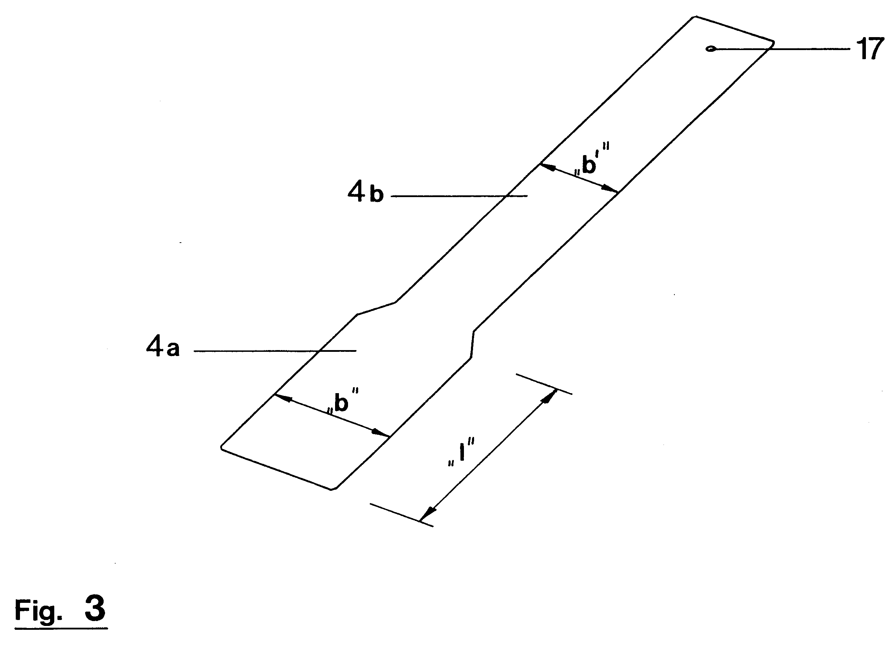

Innerhalb des Griffgehäuses 7 ist der flexible Schieber 4 gleitend geführt, um bei seiner Bewegung in Richtung des Pfeils "A" das Fanggehäuse 1 zu verschließen und bei Bewegung des flexiblen Schiebers 4 in Richtung des Pfeils "B" die Fangöffnung 6 wieder freizugeben. Der flexible Schieber 4 weist einen schmalen Verschiebeabschnitt 4b und einen breiten Verschließabschnitt 4a auf, wobei die Länge "l" des breiten Verschließabschnitts 4a mit der Länge "l" der Fangöffnung 6 im Fanggehäuse 1 übereinstimmt bzw. geringfügig länger ist und die Breite "b" des breiten Verschließabschnitts 4a des flexiblen Schiebers 4 der Breite "b" der Fangöffnung 6 entspricht (Fig. 3 und 10). Der erweiterte Abschnitt des Griffgehäuses 7 erstreckt sich mit einer abegeschrägten Außenwandung 7c und einem abgebogenen Teil 7d über einen Bereich, der etwa der Länge "l" des breiten Verschließabschnitts 4a des flexiblen Schiebers 4 entspricht, um diesen breiteren Abschnitt - bei zurückgezogenem flexiblen Schieber 4 bzw. bei geöffnetem Fanggehäuse 1 - im Griffgehäuse 7 aufnehmen zu können. Durch diese Ausbildung ist es möglich, das Fanggehäuse 1 zur Aufnahme größerer Käfer oder Insekten und zur Verbesserung der Fangeigenschaften relativ breit auszubilden und dennoch ein schmales, handliches Griffgehäuse 7 zu erhalten.

Die Stärke des aus Kunststoff bestehenden flexiblen Schiebers 4 beträgt im Ausführungsbeispiel 0.3 mm. Es sind jedoch auch schwächere bzw. stärkere Abmessungen - 0.1 bis 0.5 mm oder mehr - denkbar. Außerdem kann als Material für den flexiblen Schieber 4 auch Metall oder Papier oder eine Kombination aus den Werkstoffen Metall und Papier bzw. Kunststoff und Papier zur Anwendung gelangen.

Der flexible Schieber 4 weist am rückwärtigen Ende seines schmalen Verschiebeabschnitts 4b eine Bohrung 17 auf, in die ein am Betätigungsknopf 5 angeordneter Mitnehmerstift 18 eingreift. Der Betätigungsknopf 5 ist an seiner dem Griffgehäuse 7 zugewandten Seite mit einem im Querschnitt T-förmigen Führungsstück 19 versehen, dessen senkrechter Steg 19a in dem an der Oberseite des Griffgehäuses 7 gebildeten Bewegungsschlitz 8 seitlich geführt ist, während die Führung des Betätigungsknopfes 5 in vertikaler Richtung an der Wandung des Griffgehäuses 7 zwischen der Unterseite des Betätigungsknopfes 5 und den Flanschen 19b des Führungsstücks 19 erfolgt. Der an das T-förmige Führungsstück angeformte Mitnehmerstift 18 ist außerdem mit einem Niederhalter 21 versehen, der sich an der Oberseite des flexiblen Schiebers 4 abstützt. Die Länge des Bewegungsschlitzes 8 entspricht etwa der Länge des breiten Verschließabschnitts 4a des flexiblen Schiebers 4 plus der Länge des Steges 19a, wobei der Bewegungsschlitz 8 mit Bezug auf die Verbindung zwischen dem Betätigungsknopf 5 und dem flexiblen Schieber 4 so im Griffgehäuse 7 angeordnet ist, daß in der vorderen Anschlagstellung des Betätigungsknopfes 5 die Fangöffnung 6 des Fanggehäuses 1 durch den flexiblen Schieber 4 gerade verschlossen ist und in der hinteren Anschlagstellung des Betätigungsknopfes 5 die Vorderkante des flexiblen Schiebers 4 gerade durch den Führungsschlitz 16 hindurchreicht und die Fangöffnung 6 nahezu vollständig freigibt.

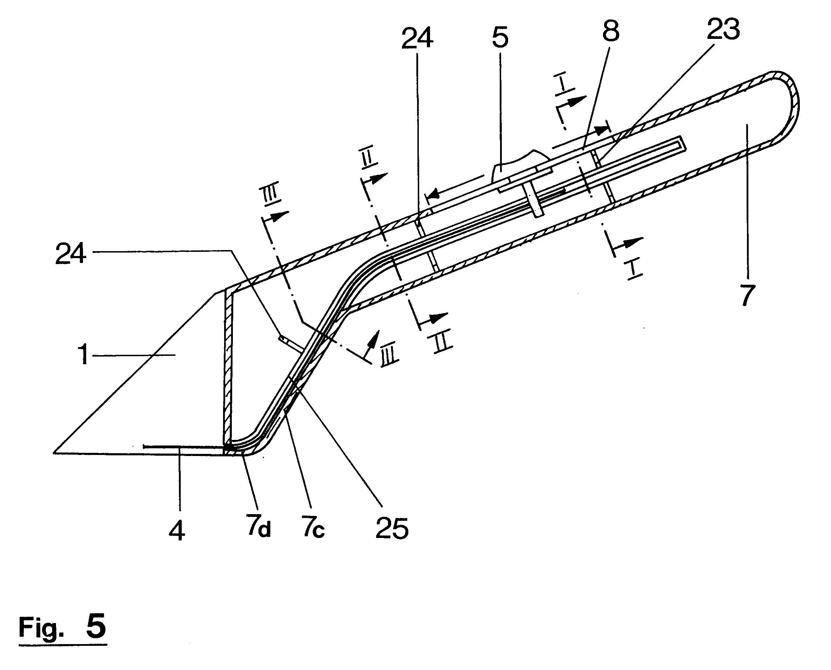

Die Führung des flexiblen Schieber 4 an der Fangöffnung 6 des Fanggehäuses 1, in dem im Bereich der zweifachen Umlenkung des Schiebers 4 gebildeten erweiterten Bahnabschnitt 7a des Griffgehäuses 7 und in dem schmaleren Griffabschnitt des Griffgehäuses 7 mit dem geraden Bahnabschnitt 7b wird vorzugsweise anhand der Figuren 2, 5 und 8 näher erläutert. Aus Fig. 5 ist der im Bahnabschnitt 7a zweifach abgebogene Verlauf des strichpunktiert dargestellten flexiblen Schiebers 4 ersichtlich.

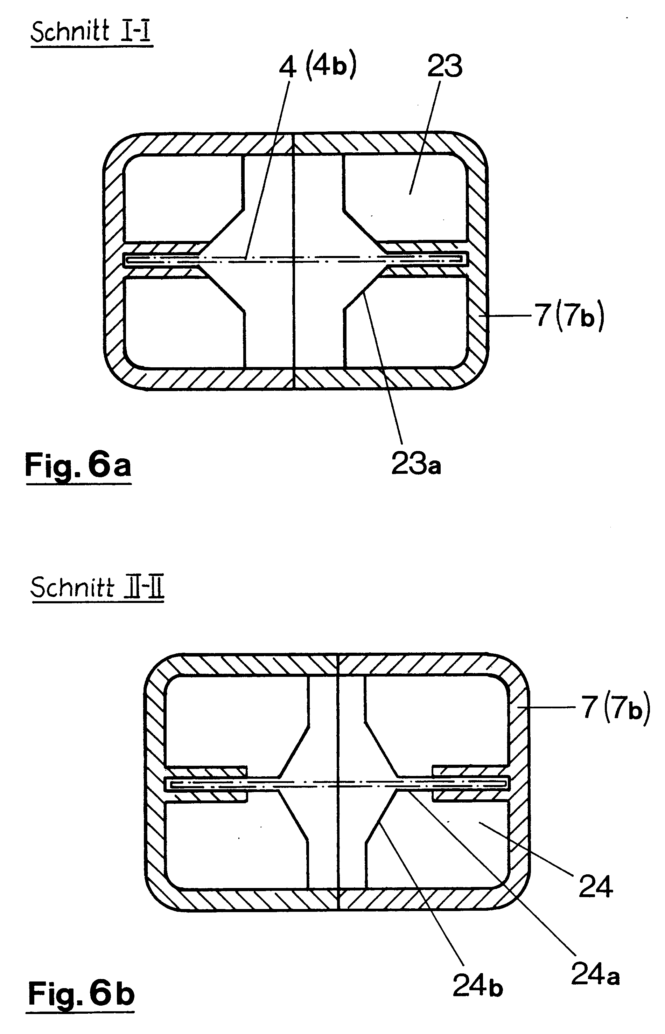

Die Führung des flexiblen Schiebers 4 erfolgt im Griffgehäuse 7 bis zu der abgeschrägten Außenwandung 7c des erweiterten Bahnabschnitts 7a zwischen an den Seitenwänden der Griffhälften 2, 3 angeformten, eine Führungsnut bildenden Führungsleisten 22. Zur Versteifung des Griffgehäuses sind an den Griffhälften 2, 3 Rippen 23 angeordnet, die eine abgeschrägte Kante 23a aufweisen, so daß der flexible Schieber 4 leicht in die Führungsnut eingeführt werden kann (siehe auch Fig. 6a). Teilweise sind die Versteifungsrippen in der Führungsebene der Führungsleisten 22 verlängert (Fig. 6b), so daß dadurch Führungsrippen 24 entstehen, die eine zusätzliche Abstützung des flexiblen Schiebers 4 an der Ober- und Unterseite oder auch nur an einer Seite darstellen. Die Führungskante 24a der Führungsrippen 24 kann unterschiedliche Längen haben und insbesondere im Bereich der abgeschrägten Außenwandung 7c und des abgebogenen Teils 7d des Griffgehäuses 7 eine größere Länge aufweisen. Die Rippen 23 und auch die Führungsrippen 24 können jeweils einander gegenüberliegend oder versetzt zueinander angeordnet sein. Die Führungsrippen 24 sind ebenfalls mit einer abgeschrägten Kante versehen.

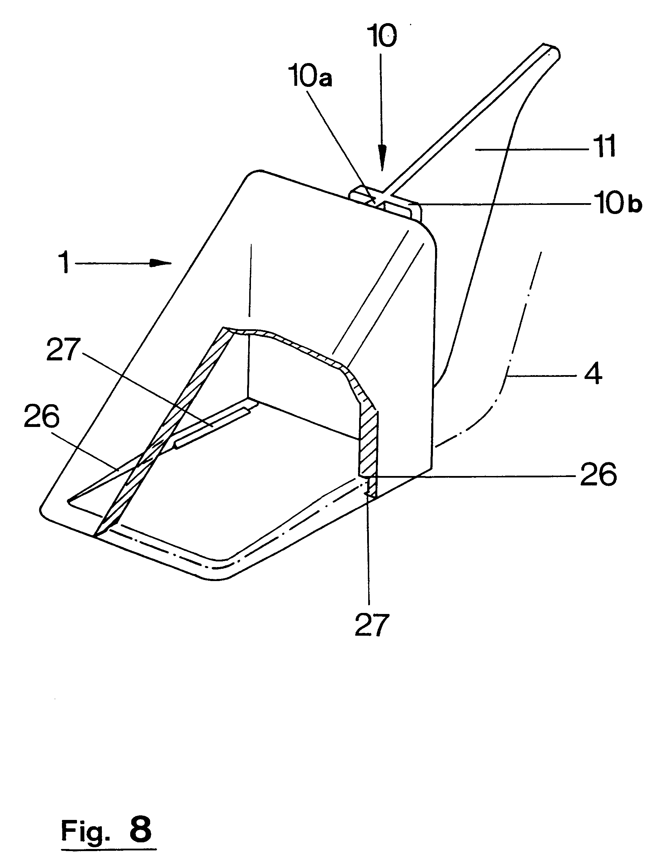

Im Bereich der abgeschrägten Außenwandung 7c und dem zum Fanggehäuse 1 abgebogenen Teil 7d des erweiterten Bahnabschnitts 7a des Griffgehäuses 7 ist der flexible Schieber 4 an seiner Unterseite unmittelbar an der Innenseite des Griffgehäuses 7 geführt, während die Führung an der Oberseite des flexiblen Schiebers 4 seitlich durch Führungsleisten 25 und die Führungsrippen 24 sowie mittig an der Unterkante des Führungsschwerts 11 (in Fig. 5 nicht dargestellt) erfolgt. Wie in Fig. 8 durch die gestrichelte Linie oberhalb des Führungsschwerts 11 kenntlich gemacht ist, kann das Führungsschwert 11 auch verlängert werden, um dadurch den mittigen Führungsbereich an der Oberseite des flexiblen Schiebers zu verlängern. Insbesondere ist eine derartige Verlängerung 11a des Führungsschwerts bei Anordnung von zwei oder mehr Führungsschwertern 11 vorgesehen.

Die Führung des flexiblen Schiebers 4 im Bereich der Fangöffnung 6 des Fanggehäuses 1 erfolgt zunächst so, daß aufgrund dessen, daß der abgebogene Teil 7d am zum Fanggehäuse 1 weisenden Ende der abgeschrägten Außenwandung 7c des Griffgehäuses leicht nach oben geführt ist, der flexible Schieber 4 beim Schließen der Fangöffnung 6 schräg nach oben gleitet und dadurch im weiteren unter Spannung entlang der am unteren Rand des Fanggehäuses 1 ausgebildeten Führungskanten 26 lauft. Dem gleichen Zweck, d. h. dem Verhindern des Ausweichens des flexiblen Schiebers 4 unter die Öffnungsebene dient eine an der unteren Kante des Fanggehäuses 1 angeformte, mit der Spitze nach innen gerichtete Führungsnase 27 mit dreieckförmigem Querschnitt. Wie aus Fig. 8 ersichtlich ist, erstreckt sich die Führungsnase 27 zumindest über einen Teilbereich des Seitenrands der Fangöffnung 6, um dadurch der Tendenz des flexiblen Schiebers 4, gerade zu Beginn des Schließvorgangs nach unten auszuweichen zu begegnen.

Aus den Figuren 8 und 9 wird weiterhin deutlich, daß die Führungskante 26 in Schließrichtung immer mehr in Richtung der Unterkante des Fanggehäuses 1 verläuft und dadurch in Schließstellung der vordere Abschnitt des flexiblen Schiebers 4 bündig mit der Unterkante des Fanggehäuses 1 bzw. der Fangöffnung 6 abschließt. Auf diese Weise wird erreicht, daß der flexible Schieber 4 während des Schließvorgangs immer mit einer gewissen Spannung entlang der nach unten verjüngt verlaufenden Führungskante 26 geführt wird. Andererseits nähert sich der flexible Schieber 4 immer mehr der Fläche, auf die das Fanggehäuse 1 aufgesetzt ist bzw. auf der sich das zu erfassende Insekt befindet, um dadurch das Insekt ohne Verletzungsgefahr auf den flexiblen Schieber 4 aufzuschieben.

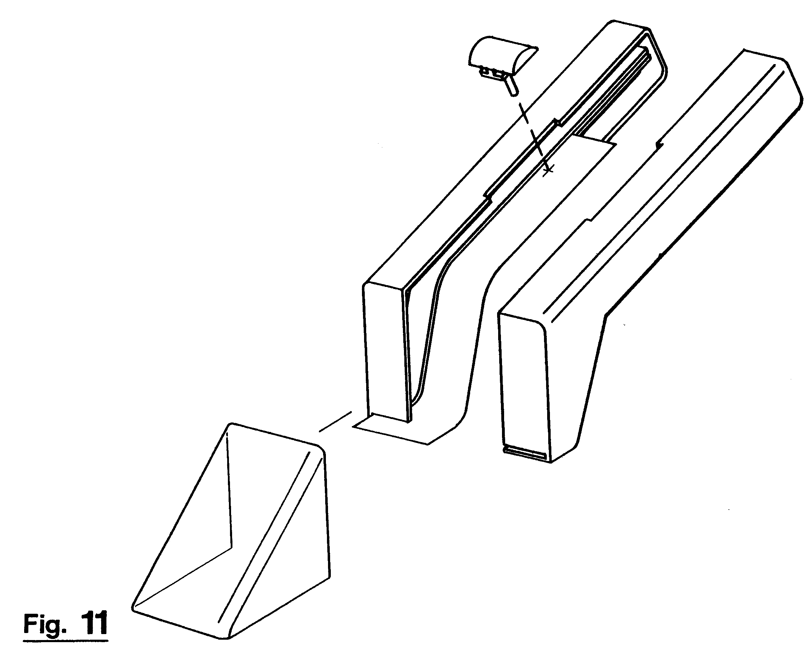

In Fig. 11 ist noch eine sehr vereinfachte Ausführungsform einer Vorrichtung zum Erfassen, Beobachten und Transportieren von Insekten, Spinnen und ähnlichen Kleintieren gezeigt, bei der das Fanggehäuse und das Griffgehäuse durchgehend die gleiche Breite aufweisen. Während die Führung des flexiblen Schiebers im wesentlichen den vorher beschriebenen Ausführungsvarianten entspricht, ist das Fanggehäuse ohne Rückwand ausgebildet und wird beispielsweise an der Stirnwand des Griffgehäuses angeklebt.

Die Montage der vorgeschlagenen Insektenfangvorrichtung mit an das Griffgehäuse anklemmbarem Fanggehäuse ist denkbar einfach:
Nach dem Einbringen des flexiblen Schiebers 4 zwischen die Führungsleisten 22 und Führungsrippen 24 mit Hilfe der abgeschrägten Kanten 23a und 24a sowie in den Führungsschlitz 16 in einer Griffhälfte 2 oder 3 wird der Betätigungsknopf 5 aufgesteckt und die Verbindung zwischen dem Mitnehmerstift 18 am Betätigungsknopf 5 und der Bohrung 17 im flexiblen Schieber 4 hergestellt. Anschließend wird das Fanggehäuse 1 mit der T-förmigen Klemmhalterung 10 auf die Stirnwand geklemmt und danach die zweite Griffhälfte augesteckt und mit der ersten fest oder lösbar verbunden.

Das Erfassen des Insekts erfolgt durch Aufsetzen des Fangehäuses 1 bei geöffneter Fangöffnung auf das Tier und allmähliches Verschieben des Betätigungsknopfes 5 in Richtung auf das Fanggehäuse 1. Dabei wird der flexible Schieber 4 über den Mitnehmerstift 18 nach vorn bewegt und die Fangöffnung 1 verschlossen. Beim Verschließen bewegt sich der flexible Schieber sehr nah am Boden, so daß das aufzunehmende Tier unversehrt in das Fanggehäuse 1 gelangt und dort zu Lehrzwecken beobachtet werden kann. Um die Beobachtungsmöglichkeiten zu verbessern, wird auf dem durchsichtigen Fanggehäuse ein vorzugsweise rechteckiges Lupenglas mit dreieckigen Seitenteilen - entsprechend der Form und Größe des Fanggehäuses - aufgeklemmt.

Das auf die vorher beschriebene Weise aufgenommene Kleintier kann nun an anderer Stelle durch Zurückziehen des Betätigungsknopfes 5 und damit verbundenes Freigeben der Fangöffnung 6 unverletzt wieder ins Freie gelassen werden.

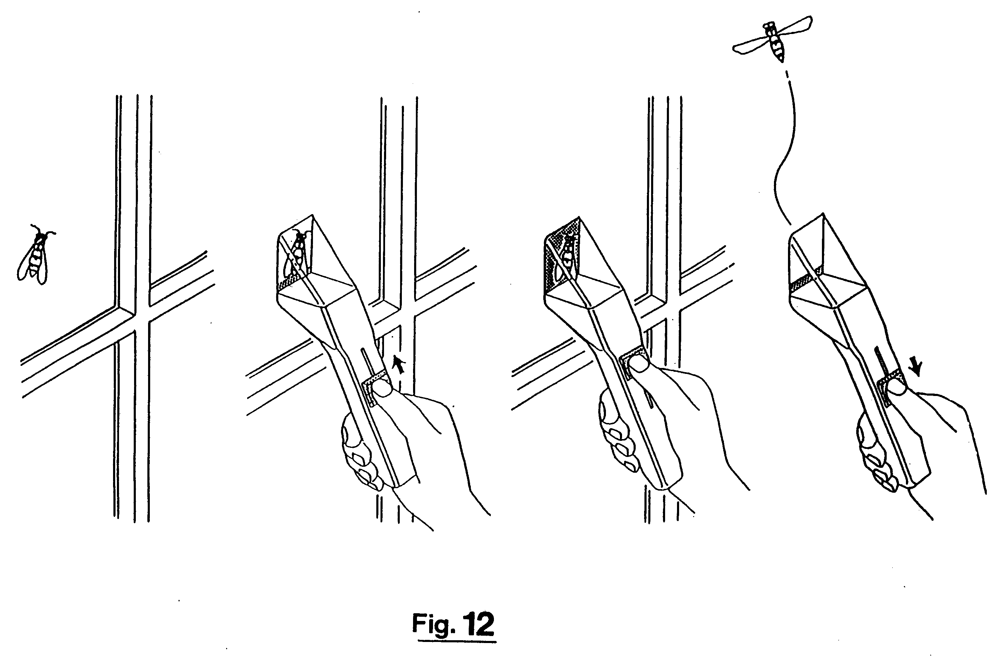

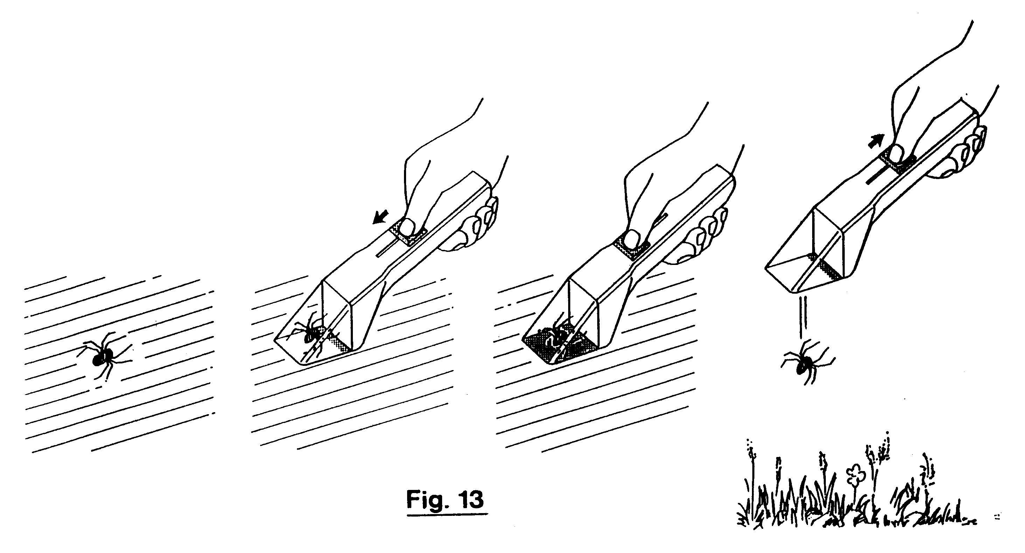

Die vorbeschriebene Handhabung des Fanggeräts zum Fangen von Insekten an einer Fensterscheibe ist in der Fig. 12 und entsprechend am Boden in Fig. 13 dargestellt mit anschließendem Freigeben des Kleintiers.

## Patentansprüche

1. Gerät zum Erfassen, Beobachten und Transportieren von Insekten, Spinnen und sonstigen Kleintieren, bestehend aus einem an einer Seite offenen, mit Hilfe eines flexiblen Schiebers (4) verschließbaren Fanggehäuse (1) und einem mit diesem verbundenen Griffgehäuse (7), in dem der flexible Schieber (4) in einem geraden Bahnabschnitt (7b) und anschließend in einem eine zweifache Umlenkung des Schiebers (4) bewirkenden, seine Ober- und Unterseite abstützenden Bahnabschnitt (7a) zu einer an der offenen Seite gebildeten Fangöffnung (6) des Fanggehäuses (1) geführt und durch einen Betätigungsknopf (5) verschiebbar ist, dadurch **gekennzeichnet**, daß der flexible Schieber (4) in dem geraden Bahnabschnitt (7b) des Griffgehäuses (7), das vertikal geteilt ist, horizontal und vertikal in durch Führungsleisten (22) gebildeten Nuten geführt ist und in dem im Bereich seiner zweifachen Umlenkung gebildeten Bahnabschnitt (7a) an seiner Unterseite an der Innenfläche einer abgeschrägten Außenwandung (7c) des Griffgehäuses (7) geführt und an der Oberseite seitlich durch Führungsleisten (25) gehalten ist.

2. Gerät nach Anspruch 1, dadurch **gekennzeichnet**, daß der flexible Schieber (4) in dem im Bereich seiner zweifachen Umlenkung gebildeten Bahnabschnitt (7a) zusätzlich durch als Gehäuseverstärkung dienende Führungsrippen (24) sowie mittig durch ein Führungsschwert (11) gehalten ist.

3. Gerät nach Anspruch 1 oder 2, dadurch **gekennzeichnet,** daß die Führung des flexiblen Schiebers (4) an der Fangöffnung (6) des Fanggehäuses (1), ausgehend von einem nach oben abgebogenen Teil (7d) des Griffgehäuses (7) und einer an den Seitenkanten der Fangöffnung (6) innen angeformten, dreieckförmigen Führungsnase (27), unter Spannung längs einer sich der Fangöffnungsebene bis zur Schließstellung allmählich nähernden Führungskante (26) geführt ist.

4. Gerät nach einem oder mehreren der Ansprüche 1 - 3, dadurch **gekennzeichnet,** daß das Griffgehäuse (7) im Bereich des geraden Bahnabschnitts (7b) schmaler als das Fanggehäuse (1) ausgeführt und in dem Bahnabschnitt (7a) im Umlenkbereich des flexiblen Schiebers (4) auf die Breite des Fanggehäuses (1) erweitert ist, wobei der flexible Schieber (4) aus einen schmalen Verschiebeabschnitt (4b) und einem breiten Verschließabschnitt (4a) besteht.

5. Gerät nach Anspruch 4, dadurch **gekennzeichnet,** daß die Breite ("b") des breiten Verschließabschnitts (4a) des flexiblen Schiebers (4) etwa dem Maß zwischen den Innenseiten der Gehäusehälften (2 und 3) im erweiterten, der der zweifachen Umlenkung des Schiebers (4) dienenden, Bahnabschnitt (7a) des Griffgehäuses (7) und der Breite ("b") zwischen den seitlichen Führungskanten an der Fangöffnung (6) entspricht, und die Breite ("b'") des schmalen Verschiebeabschnitts (4b) des flexiblen Schiebers (4) etwa mit dem inneren Breitenmaß in dem schmalen, geraden Bahnabschnitt (7b) des Griffgehäuses (7) übereinstimmt.

6. Gerät nach einem oder mehreren der Ansprüche 1 bis 5, dadurch **gekennzeichnet,** daß Zwei oder mehrere Führungsschwerter (11) angeordnet sind.

7. Gerät nach einem oder mehreren der Ansprüche 1 bis 6, dadurch **gekennzeichnet,** daß die Führungsschwerter (11) in das Griffgehäuse (7) gerichtete Verlängerungen (11a) aufweisen.

8. Gerät nach einem oder mehreren der Ansprüche 1 bis 7, dadurch **gekennzeichnet,** daß die im Griffgehäuse (7) angeordneten Rippen (23) und Führungsrippen (24) zu den jeweiligen Führungsflächen gerichtete abgeschrägte Führungskanten (23a, 24b) aufweisen.

9. Gerät nach einem oder mehreren der Ansprüche 1 bis 8, dadurch **gekennzeichnet,** daß der flexible Schieber (4) am rückwärtigen Ende seines Verschiebeabschnitts (4b) über eine Bohrung (17) mit dem am Betätigungsknopf (5) angeformten Mitnehmerstift (18) lösbar verbunden ist, wobei an dem Mitnehmerstift (18) in Höhe des flexiblen Schiebers (4) ein Niederhalter (21) angebracht ist.

10. Gerät nach einem oder mehreren der Ansprüche 1 bis 9, dadurch **gekennzeichnet,** daß an dem Betätigungsknopf (5) ein T-förmiges Führungsstück (19) angeformt ist, zwischen dessen Flanschen (19b) und dem Betätigungsknopf (5) sowie an dessen Steg (19a) der Betätigungsknopf (5) in einem im Griffgehäuse vorgesehenen Bewegungsschlitz (8) geführt ist.

11. Gerät nach einem oder mehreren der Ansprüche 1 bis 10, dadurch **gekennzeichnet,** daß die Länge "l" des Verschließabschnitts (4a) des flexiblen Schiebers (4) der Länge "l" der Fangöffnung (6) entspricht und die Länge der abgeschrägten Außenwandung (7c) einschließlich des abgebogenen Teils (7d) in dem erweiterten der zweifachen Umlenkung des Schiebers (4) dienenden Bahnabschnitt (7a) des Griffgehäuses (7) im wesentlichen ebenfalls der Länge "l" des Verschließabschnitts (4a) entspricht.

12. Gerät nach einem oder mehreren der Ansprüche 1 bis 11, dadurch **gekennzeichnet,** daß der flexible Schieber (4) aus einer Folie aus Kunststoff, Metall oder Papier oder aus einer Kombination aus Papier und Kunststoff bzw. Papier und Metall besteht.

13. Gerät nach Anspruch 12, dadurch **gekennzeichnet,** daß die Stärke der Folie vorzugsweise zwischen 0,1 und 0,5 mm, vorzugsweise bei 0,3 mm, liegt.

14. Gerät nach einem oder mehreren der Ansprüche 1 bis 13, dadurch **gekennzeichnet,** daß das Fanggehäuse (1) als separates, an die Stirnwand (14) des Griffgehäuses (7) anklemmbares und an dieser fixierbares Bauteil ausgebildet ist.

15. Gerät nach Anspruche 14, dadurch **gekennzeichnet,** daß das Fanggehäuse (1) an der Außenseite seiner Rückwand (13) über eine flächige Erhöhung (9) und die gegenüberliegende Stirnwand (14) des Griffgehäuses (7) über eine der flächigen Erhöhung (9) in Form und Größe entsprechende Vertiefung (12) verfügt und an der Rückwand (13) weiterhin eine T-förmige Klemmhalterung (10) angeformt ist, über deren Flansche (10b) das Fanggehäuse (1) hinter der Stirnwand (14) verklemmt und über deren Steg (10a) und einen in der Stirnwand (14) gebildeten senkrechten Schlitz (15) sowie das Ineinandergreifen der flächigen Vertiefung (12) und der flächigen Erhöhung (9) am Griffgehäuse (7) verdrehfest gehalten ist.

16. Gerät nach einem oder mehreren der Ansprüche 2 bis 15, dadurch **gekennzeichnet,** daß das Führungsschwert oder die Führungsschwerter (11) an die Flansche (10b) der T-förmigen Klemmhalterung (10) des Fanggehäuses (1) angeformt sind.

17. Gerät nach einem oder mehreren der Ansprüche 1 bis 16, dadurch **gekennzeichnet,** daß das Fanggehäuse (1) aus einem klaren, durchsichtigen Kunststoff besteht.

18. Gerät nach einem oder mehreren der Ansprüche 1 bis 17, dadurch **gekennzeichnet,** daß auf das Fanggehäuse (1) ein rechteckiges Lupenglas mit dreieckigen Seitenteilen - entsprechend der Form des Fanggehäuses (1) - aufgeklemmt ist.

19. Gerät nach einem oder mehreren der Ansprüche 1 bis 18, dadurch **gekennzeichnet,** daß die beiden Griffhälften (2, 3) des vertikal geteilten Griffgehäuses (7) nach dem Nut-Feder-Prinzip verbunden und ultraschallverschweißt sind.

20. Gerät nach einem oder mehreren der Ansprüche 1 bis 18, dadurch **gekennzeichnet,** daß die beiden Griffhälften (2, 3) miteinander verschraubt oder verrastet sind.

## Claims

1. A device for trapping, observing and transporting insects, spiders and other small animals, comprising a catching casing (1) open on one side and closable with the aid of a flexible slide plate (4) and a grip casing (7) connected thereto, in which the flexible slide plate (4) is guided in a straight path portion (7b) to the catching opening (6) formed at the open side of the catching casing (1) and then is guided in another path portion (7a) supporting its top and bottom sides and causing twice the slide plate to reverse and is displaceable by an operating button (5) **characterized in that** the flexible slide plate (4) is guided in horizontal and vertical manner in slots formed by guide strips (22) in the straight path portion (7b) of the vertically divided grip casing (7) and is guided in another path portion (7a) formed in the aera of its double reversal on its underside on the inner faces of a bevelled outer wall (7c) of the grip casing (7) and is laterally held on the top by guide strips (25).

2. A device according to claim 1, **characterized in that** the flexible slide plate (4) in the path portion (7a) formed in the vicinity of its double reversal is additionally held by guide rips (24) serving as a casing reinforcement and centrally by a guide plate (11).

3. A device according to claim 1 or 2, **characterized in that** the guidance of the flexible slide plate (4) on the catching opening (6) of the catching casing (1), starting from an upwardly bent part (7d) of the grip casing (7) and a triangular guide nose (27) shaped internally onto the lateral edges of the catching opening (6), takes place under tension along a guide edge (26) slowly approaching the catching opening plane up to the closed position.

4. A device according to any of the claims 1 to 3, **characterized in that** the grip casing (7) in the vicinity of the straight path portion (7b) is narrower than the catching casing (1) and in the path portion (7a) within the reversal area of the flexible slide plate (4) is widened to the width of the catching casing (1), the flexible slide plate (4) comprising a narrow sliding portion (5b) and a wide closing portion (4a).

5. A device according to claim 4, **characterized in that** the width ("b") of the wide closing portion (4a) of the flexible slide plate (4) approximately corresponds to the dimension between the insides of the casing halves (2,3) in the widened path portion (7a) serving to twice reverse the flexible slide plate (4) of the grip casing (7) and to the width ("b") between the lateral guide edges on the catching opening (6) and the width ("b") of the narrow sliding portion (4b) of the flexible slide plate (4) roughly coincides with the internal width in the narrow, straight path portion (7b) of the grip casing (7).

6. A device according to any of the claims 1 to 5, **characterized in that** two or more guide plates (11) are provided.

7. A device according to one or more of the claims 1 to 6, **characterized in that** the guide plates (11) have extensions (11a) directed into the grip casing (7).

8. A device according to one or more of the claims 1 to 7, **characterized in that** the ribs (23) and guide rips (24) located in the grip casing (7) have bevelled guide edges (23a, 24b) directed towards the guide faces.

9. A device according to one or more of the claims 1 to 8, **characterized in that** the flexible slide plate (4) is detachably connected at the rear end of its sliding portion (4b) by means of a bore (17) with the driving pin (18) shaped onto the operating button (5) and a holding-down device (21) is fitted to the driving pin (18) level with the flexible slide plate (4).

10. A device according to one or more of the claims 1 to 9, **characterized in that** onto the operating button (5) is shaped a T-shaped guide piece (19), between whose flanges (19b) and the button (5), as well as on the web (19a) thereof the button (5) is guided in a movement slot (8) provided in the grip casing.

11. A device according to one or more of the claims 1 to 10, **characterized in that** the length *l* of the closing portion (4a) of the flexible slide plate (4) corresponds to the length *l* of the catching opening (6) and the length of the bevelled outer wall (7c), including the bent part (7d) in the widened path portion (7a) serving to twice reverse the flexible slide plate (4) of the grip casing (7), substantially also corresponds to the length *l* of the closing portion (4a).

12. A device according to one or more of the claims 1 to 11, **characterized in that** the flexible slide plate (4) is made from a foil or film of plastic, metal or paper or a combination of paper and plastic or paper and metal.

13. A device according to claim 12, **characterized in that** the thickness of the foil or film is between 0.1 and 0.5 mm, preferably 0.3 mm.

14. A device according to one or more of the claims 1 to 13, **characterized in that** the catching casing (1) is constructed as a separate component attachable and fixable to the end wall (14) of the grip casing (7).

15. A device according to claim 14, **characterized in that** the catching casing (1) has on the outside of its rear wall (14) a shallow protuberance (9) and the opposite end wall (14) of the grip casing (7) have a depression (12) corresponding as regards shape and size to the shallow protuberance (9) and on the rear wall (13) there is also a T-shaped clamping holder (10) by means of whose flanges (10b) the catching casing (1) is fixed behind the end wall (14) and is held in non-rotary manner by means of its web (10a) and a vertical slot (15) formed in the end wall (14) and the interengagement of the shallow depression (12) and the shallow protuberance (9) on the grip casing (7).

16. A device according to one or more of the claims 2 to 15, **characterized in that** the guide plate or plates (11) are shaped onto the flanges (10b) of the T-shaped clamping holder (10) of the catching casing (1).

17. A device according to one or more of the claims 1 to 16, **characterized in that** the catching casing (1) comprises a clear, transparent plastic.

18. A device according to one or more of the claims 1 to 17, **characterized in that** onto the catching casing (1) is fitted a rectangular viewing glass with triangular side parts corresponding to the shape of the catching casing (1).

19. A device according to one or more of the claims 1 to 18, **characterized in that** the two grip halves (2, 3) of the vertically divided grip casing (7) are interconnected according to the groove and tongue principle and are ultrasonically welded.

20. A device according to one or more of the claims 1 to 18, **characterized in that** the two grip halves (2, 3) are screwed or locked together.

## Revendications

1. Appareil pour saisir, observer et transporter des insectes, araignées et autres petits animaux, composé d'un boîtier de capture (1), ouvert sur un côté, pouvant être fermé à l'aide d'un coulisseau flexible (4) et d'un boîtier-poignée (7), relié au boîtier de capture, dans lequel le coulisseau flexible (4) est guidé dans une section de voie droite (7b) et ensuite dans une section de voie (7a), qui provoque un double renvoi du coulisseau (4), qui supporte sa face supérieure et sa face inférieure, vers une ouverture de capture (6) du boîtier de capture (1), qui est formée sur son côté ouvert, et est déplaçable par un bouton d'actionnement (5), caractérisé en ce que le coulisseau flexible (4) est guidé dans la section de voie droite (7b) du boîtier-poignée (7), qui est divisé dans le sens vertical, horizontalement et verticalement dans des rainures formées par des baguettes de guidage (22) et est guidé dans la section de voie (7a) formée dans la zone de son double renvoi sur sa face inférieure sur la face intérieure d'une paroi extérieure en biais (7c) du boîtier-poignée (7) et est maintenu sur la face supérieure latéralement par des baguettes de guidage (25).

2. Appareil selon la revendication 1, caractérisé en ce que le coulisseau flexible (4) est maintenu, dans la section de voie (7a) formée dans la zone de son double renvoi, en plus par des nervures de guidage (24), qui servent de renforcement au boîtier, ainsi qu'au milieu par une aile de guidage (11).

3. Appareil selon la revendication 1 ou 2, caractérisé en ce que le guidage du coulisseau flexible (4) est guidé sur l'ouverture de capture (6) du boîtier de capture (1), en partant d'une partie (7d) recourbée vers le haut du boîtier-poignée (7) et d'un talon de guidage (27) triangulaire, moulé à l'intérieur sur les arêtes latérales de l'ouverture de capture (6), sous tension le long d'une arête de guidage (26) qui s'approche progressivement du plan de l'ouverture de capture jusqu'à la position de fermeture.

4. Appareil selon l'une ou plusieurs des revendications 1 à 3, caractérisé en ce que le boîtier-poignée (7) est réalisé dans la zone de la section de voie droite (7b) plus étroit que le boîtier de capture (1) et est élargi dans la section de voie (7a) dans la zone du renvoi du coulisseau flexible (4) à la largeur du boîtier de capture (1), le coulisseau flexible (4) étant constitué par une section coulissante (4b) étroite et une section de fermeture (4a) large.

5. Appareil selon la revendication 4, caractérisé en ce que la largeur ("b") de la section de fermeture (4a) large du coulisseau flexible (4) correspond à peu près à la mesure entre les faces intérieures des moitiés de boîtier (2 et 3) dans la section de voie élargie (7a) du boîtier-poignée (7), qui sert au double renvoi du coulisseau (4), et la largeur ("b") entre les arêtes de guidage latérales sur l'ouverture de capture (6), et la largeur ("b'") de la section coulissante étroite (4b) du coulisseau flexible (4) coïncide à peu près avec la mesure de la largeur intérieure dans la section de voie droite étroite (7b) du boîtier-poignée (7).

6. Appareil selon l'une ou plusieurs des revendications 1 à 5, caractérisé en ce que deux ou plusieurs ailes de guidage (11) sont placées.

7. Appareil selon l'une ou plusieurs des revendications 1 à 6, caractérisé en ce que les ailes de guidage (11) présentent des prolongements (11a) orientés dans le boîtier-poignée (7).

8. Appareil selon l'une ou plusieurs des revendications 1 à 7, caractérisé en ce que les nervures (23) et les nervures de guidage (24), placées dans le boîtier-poignée (7), présentent des arêtes de guidage (23a, 24b) en biais, orientées vers les surfaces de guidage respectives.

9. Appareil selon l'une ou plusieurs des revendications 1 à 8, caractérisé en ce que le coulisseau flexible (4) est relié, à l'extrémité arrière de sa section coulissante (4b), de manière amovible à la broche d'entraînement (18) moulée sur le bouton d'actionnement (5), un dispositif de maintien en bas (21) étant installé sur la broche d'entraînement (18) à hauteur du coulisseau flexible (4).

10. Appareil selon l'une ou plusieurs des revendications 1 à 9, caractérisé en ce qu'une pièce de guidage (19) en forme de T est moulée sur le bouton d'actionnement (5), le bouton d'actionnement (5) étant guidé, entre les brides (19b) de la pièce de guidage et le bouton d'actionnement (5) ainsi que sur sa traverse (19a), dans une fente de déplacement (8) prévue dans le boîtier-poignée.

11. Appareil selon l'une ou plusieurs des revendications 1 à 10, caractérisé en ce que la longueur "l" de la section coulissante (4a) du coulisseau flexible (4) correspond à la longueur "l" de l'ouverture de capture (6) et la longueur de la paroi extérieure en biais (7c), y compris de la partie recourbée (7d) dans la section de voie élargie (7a) qui sert au renvoi double du coulisseau (4), correspond essentiellement également à la longueur "l" de la section de fermeture (4a).

12. Appareil selon l'une ou plusieurs des revendications 1 à 11, caractérisé en ce que le coulisseau flexible (4) est constitué par une feuille en matière plastique, en métal ou en papier ou en une combinaison de papier et de matière plastique ou de papier et de métal.

13. Appareil selon la revendication 12, caractérisé en ce que l'épaisseur de la feuille se situe de préférence entre 0,1 et 0,5 mm et est de préférence de 0,3 mm.

14. Appareil selon l'une ou plusieurs des revendications 1 à 13, caractérisé en ce que le boîtier de capture (1) est configuré comme un élément séparé qui peut être serré contre la paroi de face (14) du boîtier-poignée (7) et qui peut être fixé à celle-ci.

15. Appareil selon la revendication 14, caractérisé en ce que le boîtier de capture (1) dispose, sur la face extérieure de sa paroi arrière (13), d'un rehaussement en surface (9) et que la paroi de face opposée (14) du boîtier-poignée (7) dispose d'un évidement (12), dont la forme et la grandeur correspond au rehaussement en surface (9), et que de plus un support de serrage en forme de T (10) est moulé sur la paroi arrière (13), support par les brides (10b) duquel le boîtier de capture (1) est serré derrière la paroi de face (14) et est maintenu résistant à la torsion sur le boîtier-poignée (7) par la traverse (10a) de ce support et une fente verticale (15) formée dans la paroi de face (14) ainsi que par l'engrènement de l'évidement en surface (12) et du rehaussement en surface (9).

16. Appareil selon l'une ou plusieurs des revendications 2 à 15, caractérisé en ce que l'aile de guidage ou les ailes de guidage (11) sont moulées sur les brides (10b) du support de serrage en forme de T (10) du boîtier de capture (1).

17. Appareil selon l'une ou plusieurs des revendications 1 à 16, caractérisé en ce que le boîtier de capture (1) est constitué par une matière plastique claire, transparente.

18. Appareil selon l'une ou plusieurs des revendications 1 à 17, caractérisé en ce qu'un verre de loupe rectangulaire avec des parties latérales triangulaires - correspondantes à la forme du boîtier de capture (1) - est emboîté sur le boîtier de capture (1).

19. Appareil selon l'une ou plusieurs des revendications 1 à 18, caractérisé en ce que les deux moitiés de poignée (2, 3) du boîtier-poignée (7) divisé verticalement sont reliées selon le principe rainure et languette et sont soudées par ultra-sons.

20. Appareil selon l'une ou plusieurs des revendications 1 à 18, caractérisé en ce que les deux moitiés de poignée (2, 3) sont vissées l'une à l'autre ou enclenchées l'une avec l'autre.
